Europäisches Patentamt

European Patent Office

Office européen des brevets

(19)

(11) Veröffentlichungsnummer: **0 121 747**
**B1**

(12) **EUROPÄISCHE PATENTSCHRIFT**

(45) Veröffentlichungstag der Patentschrift: 27.12.90

(51) Int. Cl.⁵: **H 02 G 3/06**

(21) Anmeldenummer: **84102312.0**

(22) Anmeldetag: **03.03.84**

(54) **Kabelverschraubung.**

(30) Priorität: **15.03.83 DE 3309155**
**15.03.83 DE 3309156**

(43) Veröffentlichungstag der Anmeldung:
**17.10.84 Patentblatt 84/42**

(45) Bekanntmachung des Hinweises auf die
Patenterteilung:
**27.12.90 Patentblatt 90/52**

(84) Benannte Vertragsstaaten:
**AT BE CH DE FR GB IT LI NL**

(56) Entgegenhaltungen:
**DE-A-1 750 095**
**DE-A-2 549 061**
**DE-B-1 765 175**
**DE-C- 319 659**
**US-A-3 027 166**
**US-A-4 350 840**

(73) Patentinhaber: **Asea Brown Boveri**
**Aktiengesellschaft**
**Kallstadter Strasse 1**
**D-6800 Mannheim-Käfertal (DE)**

(72) Erfinder: **Olbrich, Knut, Dipl.-Kaufmann**
**Senefelderstrasse 114**
**D-7000 Stuttgart 1 (DE)**
Erfinder: **Ruck, Josef**
**Keplerstrasse 39**
**D-6900 Heidelberg (DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1 (DE)**

**Beschreibung**

Die Erfindung betrifft eine abdichtende Gehäusedurchführung für Kabel (Kabelverschraubung), mit einem in einen Gehäusedurchbruch einführbaren, ein Kabel aufnehmenden Stutzen, der einen am Rand des Durchbruchs abstützbaren Außenbund und auf jeder Seite des Bundes ein Außengewinde aufweist, mit einer auf eines der Außengewinde geschraubten Hutmutter, die eine zentral durchbrochene Kuppel mit einem Innenkonus aufweist, mit einem Satz ringförmiger, koaxialer Dichtungen aus gummielastischem Material, von denen die radial äußerste Dichtung sich einerseits am Stutzen und andererseits an der Kuppel der Hutmutter axial abstützt, wobei die äußerste Dichtung teilweise in den Stutzen axial eingreift und an ihrem herausragenden Ende mit einem flanschartigen Außenbund versehen ist, dessen der Kuppel der Mutter zugewandte Stirnfläche dem Innenkonus der Kuppel angepaßt ist.

Bei einer bekannten Kabelverschraubung dieser Art mit zwei koaxialen Dichtungen ist der Außendurchmesser der inneren Dichtung kleiner als der Durchmesser des kreisrunden Durchbruches in der Kuppel der Hutmutter und insbesondere kleiner als der kleinste Innendurchmesser des Stutzens. Infolgedessen könnte beim Durchstecken eines Kabels durch die vormontierte Kabelverschraubung, d. h. bei locker aufgeschraubter Hutmutter, die innere Dichtung vom Kabelende mitgenommen werden, wobei sie sich von der äußeren Dichtung trennen und durch den Stutzen ins Gehäuseinnere bewegen würde, wenn nicht ein eingelegter flacher Metallring vorhanden wäre, der sich axial an einer Innenschulter des Stutzens abstützt und die innere Dichtung axial aufhält. Dieser Metallring ist bei ausschließlicher Verwendung der äußeren Dichtung für stärkere Kabel zu entfernen.

Aus der US-PS 4 350 840 ist eine Kabelverschraubung bekannt geworden, die einen in eine Gehäuseöffnung einschraubbaren Stutzen, eine auf den Stutzen aufschraubbare Hutmutter, eine innerhalb des Stutzens befindliche äußere Dichtung und innerhalb dieser Dichtung befindliche Greifelemente aufweist. Diese Greifelemente sind durch Segmente gebildet und werden beim Aufschrauben der Hutmutter auf den Stutzen nach innen verschwenkt, so daß die im Bereich der Hutmutter befindlichen Enden der Greifelemente sich in die Außenfläche des Kabels hineindrücken. Dadurch daß die Greifelemente als Segmente ausgebildet sind, sind mehr Einzelteile vorhanden, so daß die Montage verhältnismäßig aufwendig ist.

Der Erfindung lieg deshalb die Aufgabe zugrunde, eine Kabelverschraubung ohne losen Metallring zu schaffen, bei welcher keine der Dichtungen von ihrem Platz verrückt werden kann, wenn ein Kabel eingeführt und durchgezogen wird.

Diese Aufgabe ist bei einer Kabelverschraubung der eingangs genannten Art erfindungsgemäß dadurch gelöst, daß an das der Kuppel der Hutmutter benachbarte Ende jeder radial inneren dichtung ein Außenflansch einstückig angeformt ist, welcher zwischen der ihm zugewandten Stirnfläche der äußersten Dichtung und der Kuppel axial festlegbar ist und daß der Außenflansch jeder inneren Dichtung als schirmähnlicher Hohlkegelabschnitt ausgebildet ist, der sich dem Innenkonus und der diesem angepaßten Stirnfläche anschmiegt.

Bei dieser Ausführungsform, deren Stutzen wie bei der bekannten Kabelverschraubung mit einer der Kuppel der Hutmutter zugewandten Innenschulter versehen ist, ist außerdem vorgesehen, daß die Innenschulter des Stutzens als Innenkonus ausgebildet ist und daß an das ihm benachbarte Ende wenigstens der äußersten Dichtung eine an sich bekannte flanschartige Innenlippe angeformt ist, die beim Ausstülpen auf dem Innenkonus des Stutzens abstützbar ist. Diese Innenlippe sichert auch bei Alterungsprozessen im Kabelmantel und in der Dichtung eine minimale Abdichtung, da sie sich verschiedenen Durchmesserverhältnissen anzupassen vermag.

Bei Kabelverschraubungen der eingangs genannten Art sind die im allgemeinen als Sechskant ausgebildeten rechteckigen Angriff-Flächen sowohl an der Mutter als auch am Stutzenbund gleich geformt und gleich angeordnet, so daß der Stutzenbund und die Mutter die gleiche Kontur aufweisen und deshalb für beide derselbe Schlüssel verwendet werden könnte. Gewöhnlich wird die Hutmutter aber von Hand festgezogen.

Wollte man eine Kabelverschraubung der eingangs genannten Art vormontiert, das heißt mit locker auf den Stutzen aufgeschraubter Hutmutter in der Weise in ein Innengewinde eines Gehäusedurchbruches oder in eine hinter diesem angeordnete Mutter maschinell einschrauben, daß ein motorisch antreibbarer Schraubendreher radial über die Hutmutter hinweg axial auf den Stutzenbund gesteckt und anschließend in Betrieb gesetzt wird, dann würde dies bei gleichen Konturen der Hutmutter einerseits und des Stutzenbundes andererseits voraussetzen, daß sich diese zwei Verschraubungsteile in genau gleichen Drehlagen befinden, weil der Schraubendreher andernfalls von der Hutmutter axial geführt und am Stutzenbund anstoßen würde, sich aber nicht über diesen schieben könnte, wie es zur Herstellung einer drehfesten Verbindung zwischen Schraubendreher und Stutzenbund erforderlich wäre. Die erwähnte Voraussetzung ist aber normalerweise nicht anzutreffen und es wäre auch viel zu zeitaufwendig, sie in jedem Einzelfall herzustellen.

Damit die Kabelverschraubung vormontiert ohne weiteres maschinell eingeschraubt werden kann, kann bei der erfindungsgemäßen Kabelverschraubung die von der Kreisform abweichende Spur der axialen Projektion der zylindrischen Umfangsfläche der Hutmutter auf den Bund des Zwischenstutzens in jeder Drehlage der Mutter innerhalb der dieser zugewandten axialen Stirnfläche des Bundes liegen. Dementsprechend hat die minimale Entfernung zweier bezüglich der Stutzenachse diametraler Punkte der zylindrischen Umfangsfläche des Stutzenbundes größer zu sein als die maximale Entfernung zweier diametraler Punkte der Umfangsfläche der Hutmutter. Bei Erfüllung dieser einfachen Voraussetzung spielt die Relativdrehlage der Mutter bezüglich des Stutzenbundes überhaupt keine Rolle, weil der Schraubendreher unabhängig von dieser Drehlage die Mutter axial überfahren und am Stutzenbund angreifen kann; dadurch wird die erfindungsgemäße Kabelverschraubung einfach vormontiert verarbeitet werden können.

Im folgenden ist die Erfindung anhand einer durch die Zeichnung beispielhaft dargestellten Ausführungsform der erfindungsgemäßen Kabelverschraubung im einzelnen erläutert.

Es zeigt:

Fig. 1 die linke Hälfte der Kabelverschraubung in einem Längsschnitt und die rechte Hälfte in Seitenansicht und

Fig. 2 eine axiale Stirnansicht auf die Kabelverschraubung gemäß Fig. 1.

Die Kabelverschraubung besteht aus einem kreiszylindrischen Stutzen 10, einer Hutmutter 12 und einem Satz von zwei ringförmigen koaxialen Dichtungen 14 und 16. Der Stutzen 10 weist einen als Sechskant ausgebildeten Außenbund 18 auf, der zwei Außengewinde 20 und 22 voneinander trennt. Die Bohrung 24 des Stutzens 10 weist innerhalb des Außengewindes 20 eine abstufende Innenschulter in Form eines Innenkonus 26 auf, welcher der Bohrung eine gekröpfte Profillinie gibt.

Die Hutmutter 12 weist einen als Außensechskant ausgebildeten zylindrischen Ring 28 mit Innengewinde 30 auf, das auf das Außengewinde 20 des Stutzens 10 mehr oder weniger weit aufgeschraubt ist. Der Ring 28 der Hutmutter 12 wird von einer Kuppel 32 überwölbt, die einen zentralen kreisförmigen Durchbruch 34 besitzt, dessen Berandung ein Innenkonus 36 der Kuppel bildet, welcher dem Inneren der Hutmutter zugewandt ist.

Die äußere Dichtung 16 weist einen flanschartigen Außenbund 38 auf, mit dem sie an die der Kuppel 32 der Hutmutter 12 zugekehrte Stirnfläche des Stutzens 10 anschlägt; ihre dem Innenkonus 36 der Kuppel 32 der Hutmutter 12 zugewandte Stirnfläche 40 ist insbesondere im Bereich des Außenbundes 38 angepaßt und weist gleiche Konizität auf. An das axial innere Ende der äußeren Dichtung 16, welches am Innenkonus 26 des Stutzens 10 liegt, ist eine flanschartige Innenlippe 42 einstückig angeformt, die den Innendurchmesser der äußeren Dichtung 16 an einer Stelle verkleinert und ausgestülpt werden kann.

Die innere Dichtung 14 weist eine entsprechende Innenlippe 44 auf, besitzt aber keinen flanschartigen Außenbund (38), sondern einen an ihr axial äußeres Ende einstückig angeformten Außenflansch 46, der als schirmähnlicher Hohlkegelabschnitt ausgebildet ist und bei festgezogener Hutmutter 12 einerseits an deren Innenkonus 36 und andererseits an der Stirnfläche 40 der äußeren Dichtung 16 anliegt. Die kreiszylindrische Berührungsfläche der zwei Dichtungen 14 und 16 fluchtet axial mit der Berandung des Durchbruches 34 der Hutmutter 12.

Nach Entfernung der inneren Dichtung 14 greift der Innenkonus 36 der Kuppel 32 der Hutmutter 12 unmittelbar an der Stirnfläche 40 der Dichtung 16 an.

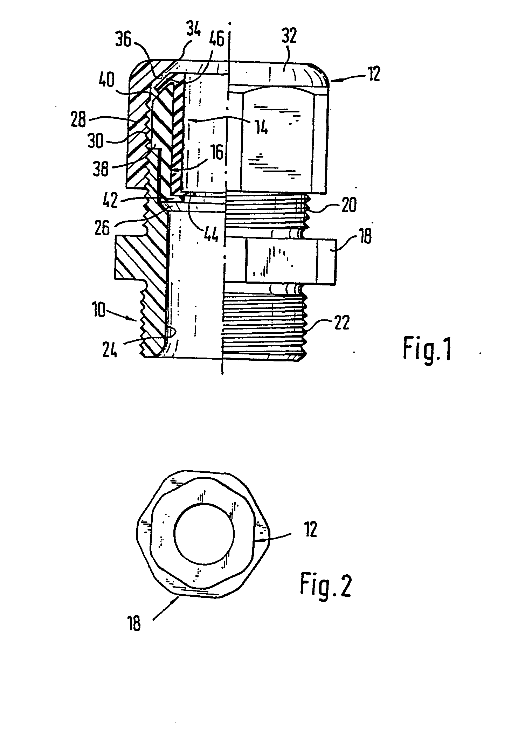

Die Umfangsflächen des Bundes 18 und der Mutter 12 sind zylindrisch und bilden wie bekannt je einen Sechskant, bei dem sechs durch Abrundung verbreiterte Kanten sechs Rechteckflächen gegeneinander abgrenzen. Wie Fig. 2 zeigt, sind die Konturen der Umfangsflächen des Bundes 18 beziehungsweise der Mutter 12 einander geometrisch ähnlich, aber in der Länge ungleich, und zwar derart, daß der Durchmesser des Umkreises der Kontur der Hutmutter merklich kleiner ist als der Durchmesser des Inkreises des Stutzenbundes. Zur Erleichterung des Ansatzes eines Schraubendrehers mit Innensechskant, dessen Kontur der Kontur des Außenbundes 18 am Stutzen 10 entspricht, ist die Hutmutter 12, wie Fig. 2 zeigt, an ihrem vom Bund wegweisenden Ende mit einer Abrundung in allen axialen Längsebenen versehen.

**Patentansprüche**

1. Abdichtende Gehäusedurchführung für Kabel (Kabelverschraubung), mit einem in einen Gehäusedurchbruch einführbaren, ein Kabel aufnehmenden Stutzen (10), der einen am Rand des Durchbruchs abstützbaren Außenbund (18) und auf jeder Seite des Bundes ein Außengewinde (20, 22) aufweist, mit einer auf eines der Außengewinde (20) geschraubten Hutmutter (12), die eine zentral durchbrochene Kuppel mit einem Innenkonus (36) aufweist, mit einem Satz ringförmiger, koaxialer Dichtungen (14, 16) aus gummielastischem Material, von denen die radial äußerste Dichtung (16) sich einerseits am Stutzen (10) und andererseits an der Kuppel der Hutmutter (12) axial abstützt, wobei die äußerste Dichtung (16) teilweise in den Stutzen (10) axial eingreift und an ihrem herausragenden Ende mit einem flanschartigen Außenbund (38) versehen ist, dessen der Kuppel der Mutter (12) zugewandte Stirnfläche (40) dem Innenkonus (36) der Kuppel angepaßt ist, dadurch gekennzeichnet, daß an das der Kuppel (32) der Hutmutter (12) benachbarte Ende jeder radial inneren Dichtung (14) ein Außenflansch (46) einstückig angeformt ist, welcher zwischen der ihm zugewandten Stirnfläche (40) der äußersten Dichtung (16) und der Kuppel axial festlegbar ist, und daß der Außenflansch (46) jeder inneren Dichtung (14) als schirmähnlicher Hohlkegelabschnitt ausgebildet ist, der sich dem Innenkonus (36) und der diesem angepaßten Stirnfläche (40) anschmiegt.

2. Kabelverschraubung nach Anspruch 1, deren Stutzen (10) mit einer der Kuppel der Hutmutter (12) zugewandten Innenschulter (26) versehen ist, dadurch gekennzeichnet, daß die Innenschulter des Stutzens (10) als Innenkonus (26) ausgebildet ist und daß an das ihm benachbarte Ende wenigstens der äußersten Dichtung (16) eine an sich bekannte flanschartige Innenlippe (42) angeformt ist, die beim Ausstülpen auf dem Innenkonus (26) des Stutzens (10) abstützbar ist.

3. Kabelverschraubung nach Anspruch 1 oder 2, bei der der Außenbund (18) und die Hutmutter (12) jeweils mit mindestens einer Angriffsfläche für einen Schlüssel zum Drehen des Stutzens (10) bzw. der Hutmutter (12) um seine bzw. ihre Längsachse versehen sind, dadurch gekennzeichnet, daß die von der Kreisform abweichende Spur der axialen Projektion der zylindrischen Umfangsfläche der Hutmutter (16) auf den Bund (18) in jeder Drehlage der Mutter (16) innerhalb der dieser zugewandten axialen Stirnfläche des Bundes (18) liegt.

**Revendications**

1. Traversée d'étanchéité de coffret pour câbles (passecâble à vis), comprenant un manchon (10), pouvant être introduite dans une ouverture de coffret et recevant un câble, qui comporte un épaulement extérieur (18) pouvant s'appuyer sur le bord de l'ouverture et, de chaque côté de l'épaulement, un filetage extérieur (20, 22), un écrou borgne (12), vissé sur l'un des filetages extérieurs (20), qui présente un dôme percé en son centre et comportant un cône intérieur (36), avec un jeu de joints d'étanchéité (14, 16) annulaires et coaxiaux, constitués d'un matériau en caoutchouc élastique, dont le joint d'étanchéité (16) situé radialement le plus à l'extérieur s'appuie, radialement, sur le manchon (10), d'une part, et sur le dôme de l'écrou borgne (12), d'autre part, ledit joint d'étanchéité (16), situé le plus à l'extérieur, étant engagé axialement en partie dans le manchon (10) et étant pourvu, à son extrémité en saillie, d'un épaulement extérieur (38), à la manière d'un collet, dont la face frontale (40), tournée vers le dôme de l'écrou (12), est adaptée au cône intérieur (36) dudit dôme, caractérisée en ce qu'à l'extrémité, située à proximité du dôme (32) de l'écrou borgne (12), de chaque joint d'étanchéité (14) radialement intérieur, est conformée, d'une seule pièce, un rebord extérieur (46) qui peut être immobilisé axialement entre la face frontale (40), tournée vers lui, du joint d'étanchéité (16), situé le plus à l'extérieur, et le dôme, et que le rebord extérieur (46) de chaque joint d'étanchéité intérieur (14) est réalisé en forme de section de cône creux, à la manière d'un écran, qui épouse la forme du cône intérieur (36) et de la face frontale (40) adaptée à celui-ci.

2. Passe-câble fileté selon la revendication 1, dont le manchon (10) est pourvu d'un épaulement intérieur (26), tourné vers le dôme de l'écrou borgne (12), caractérisé en ce que l'épaulement intérieur du manchon (10) est réalisé en forme de cône intérieur (26) et qu'à l'extrémité, située à proximité dudit épaulement, d'au moins le joint d'étanchéité extérieur (16), est constituée une lèvre intérieure (42) en forme de rebord et connue en soi, qui, en cas de dilatation, peut s'appuyer sur le cône intérieur (26) du manchon (10).

3. Passe-câble fileté selon la revendication 1 ou 2, dans lequel l'épaulement extérieur (18) et l'écrou borgne (12) sont pourvus chacun d'au moins une surface d'attaque destinée à une clé pour faire tourner le manchon (10) ou l'écrou borgne (12) autour de leur axe longitudinal respectif, caractérisé en ce que la trace, s'écartant de la forme circulaire, de la projection axiale de la surface périphérique cylindrique de l'écrou borgne (12) sur l'épaulement (18) dans chaque position de rotation de l'écrou (12), se trouve à l'intérieur de la face frontale axiale de l'épaulement (18), tournée vers ledit écrou.

**Claims**

1. Sealing housing penetration for cables (cable gland), having a socket (10) which can be inserted into a housing aperture, accommodates a cable and has an external collar (18), which can be supported on the edge of the aperture, and an external thread (20, 22) on each side of the collar, having a cap nut (12), which is screwed onto one of the external threads (20) and has a centrally pierced dome with an internal cone (36), and having a set of annular, coaxial seals (14, 16) made of elastomeric material, of which the radially outermost seal (16) is supported axially on the socket (10), on the one hand, and on the dome of the cap nut (12) on the other hand, the outermost seal (16) partially engaging axially in the socket (10) and being provided on its projecting end with a flange-like external shoulder (38), whose end face (40) turned towards the dome of the nut (12) is matched to the internal cone (36) of the dome, characterized in that at the end of each radially inner seal (14) adjacent to the dome (32) of the cap nut (12), there is integrally formed in one piece an outer flange (46) which can be fixed in position axially between the end face (40), turned towards it, of the outermost seal (16) and the dome, and in that the external flange (46) of each inner seal (14) is constructed as a shield-like hollow conical section which fits closely against the internal cone (36) and the end face (40) matched thereto.

2. Cable gland according to Claim 1, whose socket (10) is provided with an internal shoulder (26) turned towards the dome of the cap nut (12), characterized in that the internal shoulder of the socket (10) is constructed as an internal cone (26), and in that on the end adjacent to it of at least the outermost seal (16) there is integrally formed a flange-like internal lip (42) known per se, which, upon being turned out, can be supported on the internal cone (26) of the socket (10).

3. Cable gland according to Claim 1 or 2, in which the external collar (18) and the cap nut (12) are each provided with at least one engaging face for a spanner to turn the socket (10) or the cap nut (12) about its longitudinal axis, characterized in that the track, deviating from the circular shape, of the axial projection of the cylindrical peripheral surface of the cap nut (16) onto the collar (18) is located in each rotary position of the nut (16) inside the axial end face, turned towards said nut, of the collar (18).

Fig.1

Fig.2

1